# EUROPEAN PATENT SPECIFICATION

(11) **EP 3 206 938 B1**
(45) Date of publication and mention of the grant of the patent: **27.06.2018**
(21) Application number: 16770566.4
(22) Date of filing: 16.09.2016
(51) Int. Cl.: B62D 25/14, B62D 29/04

(54) **VEHICLE CROSS MEMBERS AND RELATED METHODS**
FAHRZEUGQUERTRÄGER UND ZUGEHÖRIGE VERFAHREN
ÉLÉMENTS TRANSVERSAUX DE VÉHICULE ET PROCÉDÉS ASSOCIÉS

(30) Priority: 17.09.2015 US 201562220047 P
(43) Date of publication of application: 23.08.2017
(73) Proprietor: SABIC Global Technologies B.V., 4612 PX Bergen op Zoom (NL)
(72) Inventor: KULKARNI, Sandeep, 6181 MA Stein (NL); SCHIJVE, Warden, 6181 MA Stein (NL); DE VRIES, David, 6365 CX Schinnen (NL)
(74) Representative: J A Kemp
(86) International application number: PCT/IB2016/055549
(87) International publication number: WO 2017/046769

(56) References cited:
- EP-A2- 1 415 897
- EP-A2- 2 113 448
- US-A1- 2002 011 741
- US-A1- 2013 320 707

## Description

### CROSS-REFERENCE TO RELATED APPLICATIONS

This application claims the benefit of priority of U.S. Provisional Patent Application No. 62/220,047, filed September 17, 2015.

### BACKGROUND

### 1. Field of Invention

The present invention relates generally to vehicles, and more specifically, but not by way of limitation, to vehicle cross members (e.g., car cross beams) and methods and kits for making the same.

### 2. Description of Related Art

Vehicles typically include a number of cross members, including car cross beams, front and rear bulkheads, pillars (e.g., A-, B-, C-, and/or D-pillars), bumper beams, and door beams, just to name a few, each of which may serve one or more of various purposes, such as those relating to safety, structural integrity, noise vibration and harshness (NVH) reduction, and/or the like. For example, many vehicles include a car cross beam, which may be configured to support a dash, steering column, instrument panel, heating ventilation and air conditioning (HVAC) component, air bag, and/or the like. Typically, car cross beams are designed to be rigid to, for example, resist and/or prevent undesirable movement of supported components (e.g., in the event of a crash), increase the structural integrity of the vehicle body, and/or reduce NVH.

Many existing car cross beams are formed, at least in part, of steel and/or other heavy metals. Some existing car cross beams may be at least partially formed from lighter-weight metals, such as magnesium, aluminum, and/or the like. Other existing car cross beams may be formed, at least in part, from light weight composite materials.

Many existing car cross beams, regardless of their material(s) of manufacture, are of multi-piece construction, consisting of an assembly of stamped component(s), bracket(s), beam(s), and/or the like.

Examples of car cross beams are disclosed in Pub. Nos.: (1) WO 2013/182521; (2) WO 2013/182524; and (3) WO 2013/182522. EP 1415897 relates to a cross member that comprises a base frame extending in width direction of a vehicle body, reinforcing frame parts formed integral with the base frame to cover the circumference of the base frame in the width direction, and ends connected to side framework structures of the vehicle body.

### SUMMARY

Existing car cross beams may be subject to a number of shortcomings. For example, car cross beams including steel and/or other heavy metals may be undesirably heavy, resulting in a decrease in vehicle performance and/or an increase in assembly time and/or cost. By way of further example, existing car cross beams including lighter-weight metals, such as magnesium, aluminum, and/or the like, may be relatively expensive and may necessitate increased tool maintenance (e.g., due to increased casting temperature requirements). As an additional example, existing car cross beams including light weight composite materials may necessitate complex, multi-piece construction due to, for example, difficulties associated with the molding process. Further, existing car cross beams of multi-piece construction may complicate assembly procedures (e.g., by requiring the joining of different materials), and/or undesirably increase weight, assembly time, and/or cost. As described in more detail below, the present vehicle cross members can be configured to address some or all of these shortcomings.

Some embodiments of the present vehicle cross members are configured, through an elongated beam extending a length between a first end and a second end and defined by a composite body including a plastic material (or plastic component) and one or more laminates, where laminate(s) at least partially disposed along the elongated beam span a total distance along the elongated beam that is less than 50% of the length, to, for example, provide for reduced manufacturing costs as well as desirable structural characteristics (e.g., stiffness).

Some embodiments of the present vehicle cross members are configured, through: (1) an elongated beam extending between a first end and a second end and defined by a composite body including a plastic material and one or more laminates, where at least one of the first and second ends defines one or more openings into the elongated beam for securing the elongated beam to a vehicle; and/or (2) a composite body including a plastic material and one or more laminates, the composite body defining an elongated beam and: (a) a first support unitary with and extending from the elongated beam; (b) a second support unitary with and extending from the elongated beam (e.g., and away from the first support, if present); and/or (c) a third support unitary with and extending from the elongated beam (e.g., and alongside and spaced apart from the second support, if present), to, for example, be: (i) mounted to a vehicle (e.g., via the first and/or second ends of the elongated beam, the first support, the second support, and/or the third support) without requiring additional, separate mounting components (other than fasteners) such as, for example, flanges, mounts, and/or plates (e.g., providing for reduced manufacturing costs, assembly time, and/or the like); and/or (ii) molded in a single mold (e.g., including one or more sliders) and/or in a one shot and/or one step molding process.

Some embodiments of the present vehicle cross members are configured, through a composite body including a plastic material and one or more laminates, the composite body defining an elongated beam, a first support extending from the elongated beam, and/or a second support extending from the elongated beam (e.g., and away from the first support, if present), where the one or more laminates are each at least partially disposed along the elongated beam, first support, and/or second support and include: (1) a layer of material having fibers aligned in a first direction that is substantially parallel to a longitudinal axis of the respective beam and/or support; and (2) a layer of material having fibers aligned in a second direction that is angularly disposed relative to the first direction (e.g., such that a smallest angle between the first direction and the second direction is from 0 to 90 degrees, from 10 to 80 degrees, from 30 to 60 degrees, from 40 to 50 degrees, and/or the like), to, for example, provide for enhanced structural efficiency, capability to handle torsion and/or bending loads, resistance to creep and fatigue, and/or the like.

Some embodiments of the present elongated members (e.g., which may be used to, for example, form an elongated beam of some embodiments of the present vehicle cross members) are configured, through a sidewall defining an interior channel and one or more flanges extending away from the interior channel (e.g., defining a Z-shaped cross-section) to be formed in a mold such that a smallest angle between each portion of the sidewall and an opening axis of the mold is at least 15 degrees (e.g., from 40 to 50 degrees) (e.g., promoting an even distribution of molding pressure to each portion of the sidewall, thereby mitigating the occurrence of surface defects, voids, and/or the like).

Some embodiments of the present vehicle cross members comprise: a composite body comprising a plastic material and one or more laminates, where the body defines an elongated beam, and where at least one of the one or more laminates is at least partially disposed along the elongated beam. In some embodiments, the elongated beam defines an open cross-section. In some embodiments, the vehicle cross member comprises a car cross beam. In some embodiments, the elongated beam defines a closed cross-section.

In some embodiments, the at least one of the one or more laminates at least partially disposed along the elongated beam span a total distance along the elongated beam that is less than 50% of a length of the elongated beam between the first and second ends. In some embodiments, the at least one of the one or more laminates at least partially disposed along the elongated beam span a total distance along the elongated beam that is 50% or more of a length of the elongated beam between the first and second ends.

In some embodiments, at least one of the first end and second end of the elongated beam defines one or more openings into the elongated beam for securing the elongated beam to a vehicle. In some embodiments, at least one of the one or more openings extends through at least one of the one or more laminates.

In some embodiments, the body defines a first support unitary with and extending from the elongated beam. In some embodiments, at least one of the one or more laminates is at least partially disposed along the elongated beam and at least partially disposed along the first support. In some embodiments, the first support defines one or more openings for securing the support to a vehicle. In some embodiments, at least one of the one or more openings of the first support extends through at least one of the one or more laminates.

In some embodiments, the body defines a second support unitary with and extending from the elongated beam, and at least one of the one or more laminates is at least partially disposed along the second support. In some embodiments, at least one of the one or more laminates is at least partially disposed along the second support and at least partially disposed along the elongated beam. In some embodiments, the second support extends away from the first support. In some embodiments, at least one of the one or more laminates is at least partially disposed along the second support and at least partially disposed along the first support.

In some embodiments, the body defines a third support unitary with and extending from the elongated beam alongside and spaced from the second support.

In some embodiments, at least one of the one or more laminates comprises a layer of material comprising fibers. In some embodiments, at least one of the one or more laminates comprises a matrix material comprising the plastic material. In some embodiments, at least one of the one or more laminates comprises 30% to 70% fibers by volume. In some embodiments, at least one of the one or more laminates comprises a layer of material comprising carbon fibers. In some embodiments, at least one of the one or more laminates comprises a layer of material comprising glass fibers. In some embodiments, at least one of the one or more laminates comprises a layer of material comprising basalt fibers. In some embodiments, at least one of the one or more laminates comprises a layer of material comprising fabric. In some embodiments, at least one of the one or more laminates comprises a layer of material comprising continuous fibers. In some embodiments, at least one of the one or more laminates comprises a layer of material comprising discontinuous fibers.

In some embodiments, at least one of the one or more laminates comprises a first layer having fibers aligned in a first direction and a second layer having fibers aligned in a second direction that is angularly disposed relative to the first direction. In some embodiments, a smallest angle between the first direction and the second direction is from 10 to 80 degrees. In some embodiments, a smallest angle between the first direction and the second direction is from 20 to 70 degrees. In some embodiments, the smallest angle between the first direction and the second direction is from 30 to 60 degrees. In some embodiments, the smallest angle between the first direction and the second direction is from 40 to 50 degrees.

In some embodiments, the plastic material defines a plurality of ribs. In some embodiments, the plastic material comprises a thermoplastic material. In some embodiments, the plastic material comprises a thermoset material.

In some embodiments, the body defines one or more mounts. In some embodiments, at least one of the one or more mounts is configured to be coupled to a steering wheel. In some embodiments, at least one of the one or more mounts is configured to be coupled to an airbag housing or carrier component.

Some embodiments of the present methods for forming a vehicle cross member comprise forming, in a mold, a composite body of any of the present vehicle cross members. In some embodiments, forming, in the mold, the body comprises forming the one or more laminates in the mold. In some embodiments, forming the one or more laminates in the mold comprises placing one or more layers, each comprising fibers, in the mold and overmolding the plastic material onto the one or more layers. Some embodiments comprise placing the one or more laminates into the mold and overmolding the plastic material onto the one or more laminates.

In some embodiments, the mold comprises one or more sliders, each having a slider opening direction, and the slider opening direction of at least one of the one or more sliders is angularly disposed relative to an opening direction of the mold.

Some embodiments of the present methods for forming a vehicle cross member comprise: forming, in a mold, a first elongated member having a sidewall defining an interior channel and one or more flanges extending away from the interior channel, forming, in a mold, a second elongated member having a sidewall defining an interior channel and one or more flanges extending away from the interior channel, and forming an elongated beam by coupling at least one of the one or more flanges of the first elongated member to the second elongated member and coupling at least one of the one or more flanges of the second elongated member to the first elongated member, where at least one of the first elongated member and the second elongated member is defined by a composite body comprising a plastic material and one or more laminates, and where at least one of the one or more laminates is at least partially disposed along at least one of the first elongated member and the second elongated member. In some embodiments, each of the first elongated member and the second elongated member is defined by a composite body comprising a plastic material and one or more laminates, at least one of the one or more laminates of the composite body defining the first elongated member is at least partially disposed along the first elongated member, and at least one of the one or more laminates of the composite body defining the second elongated member is at least partially disposed along the second elongated member. In some embodiments, the coupling comprises welding.

In some embodiments, forming the elongated beam comprises coupling at least one of the one or more flanges of the first elongated member to the sidewall of the second elongated member within the interior channel and coupling at least one of the one or more flanges of the second elongated member to the sidewall of the first elongated member within the interior channel. In some embodiments, forming, in the mold, the first elongated member is such that a smallest angle between each portion of the sidewall of the first elongated member and an opening axis of the mold is at least 15 degrees. In some embodiments, forming, in the mold, the first elongated member is such that a smallest angle between each portion of the sidewall of the first elongated member and the opening axis of the mold is from 40 to 50 degrees.

In some embodiments, a first end of the sidewall of the first elongated member defines a first flange, and a second end of the sidewall of the first elongated member defines a second flange, a first end of the sidewall of the second elongated member defines a first flange, and a second end of the sidewall of the second elongated member defines a second flange, and forming the elongated beam comprises coupling the first flange of the first elongated member to the first flange of the second elongated member and coupling the second flange of the first elongated member to the second flange of the second elongated member.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the terms "substantially," "approximately," and "about" may be substituted with "within [a percentage] of" what is specified, where the percentage includes .1, 1, 5, and 10 percent.

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), "include" (and any form of include, such as "includes" and "including"), and "contain" (and any form of contain, such as "contains" and "containing") are open-ended linking verbs. As a result, an apparatus that "comprises," "has," "includes," or "contains" one or more elements possesses those one or more elements, but is not limited to possessing only those elements. Likewise, a method that "comprises," "has," "includes," or "contains" one or more steps possesses those one or more steps, but is not limited to possessing only those one or more steps.

Any embodiment of any of the apparatuses, systems, and methods can consist of or consist essentially of - rather than comprise/include/contain/have - any of the described steps, elements, and/or features. Thus, in any of the claims, the term "consisting of" or "consisting essentially of" can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments described above and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. The figures are drawn to scale (unless otherwise noted), meaning the sizes of the depicted elements are accurate relative to each other for at least the embodiment depicted in the figures.
**FIG. 1A** is a front perspective view of a first embodiment of the present vehicle cross members.
**FIGs. 1B-1D** are front perspective, front, and rear perspective views, respectively, of the vehicle cross member of FIG. 1A.
**FIG. 1E** is a rear perspective view of the vehicle cross member of FIG. 1A.
**FIG. 2** is a front perspective view of one or more laminates of the vehicle cross member of FIG. 1A.
**FIG. 3A** is a top view of the one or more laminates of FIG. 2, shown as if lying flat on a surface.
**FIGs. 3B** and **3C** are top views of respective laminate(s), shown as if lying flat on a surface, which may be suitable for use in some embodiments of the present vehicle cross members.
**FIG. 4** is an exploded perspective view of a portion of a laminate, which may be suitable for use in some embodiments of the present vehicle cross members.
**FIG. 5A** is a cross-sectional end view of an elongated beam of the vehicle cross member of FIG. 1A.
**FIGs. 5B** and **5C** are cross-sectional end views of respective elongated beams, which may be suitable for use in some embodiments of the present vehicle cross members.
**FIG. 6** is a graph depicting structural characteristics of the vehicle cross member of FIG. 1A compared with structural characteristics of an aluminum car cross beam.
**FIG. 7** is a front perspective view of a second embodiment of the present vehicle cross members.
**FIG. 8** depicts features related to some embodiments of the present methods.
**FIG. 9** depicts features related to some embodiments of the present methods.
**FIG. 10A** is an exploded perspective view of a third embodiment of the present vehicle cross members.
**FIGs. 10B** and **11A** are perspective and cross-sectional end views, respectively, of an elongated beam of the vehicle cross member of FIG. 10A.
**FIG. 11B** is a cross-sectional end view of an elongated beam, which may be suitable for use in some embodiments of the present vehicle cross members.
**FIG. 12** depicts features related to some embodiments of the present methods.
**FIG. 13** is a graph depicting structural characteristics of the vehicle cross member of FIG. 10A compared with structural characteristics of an aluminum car cross beam.

### DETAILED DESCRIPTION OF ILLUSTRATIVE EMBODIMENTS

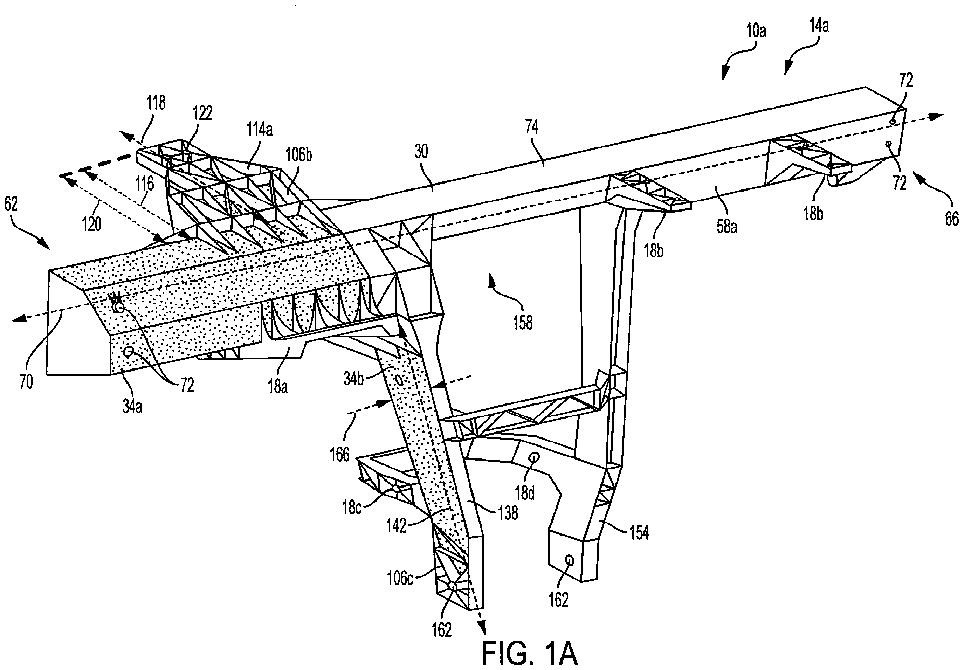

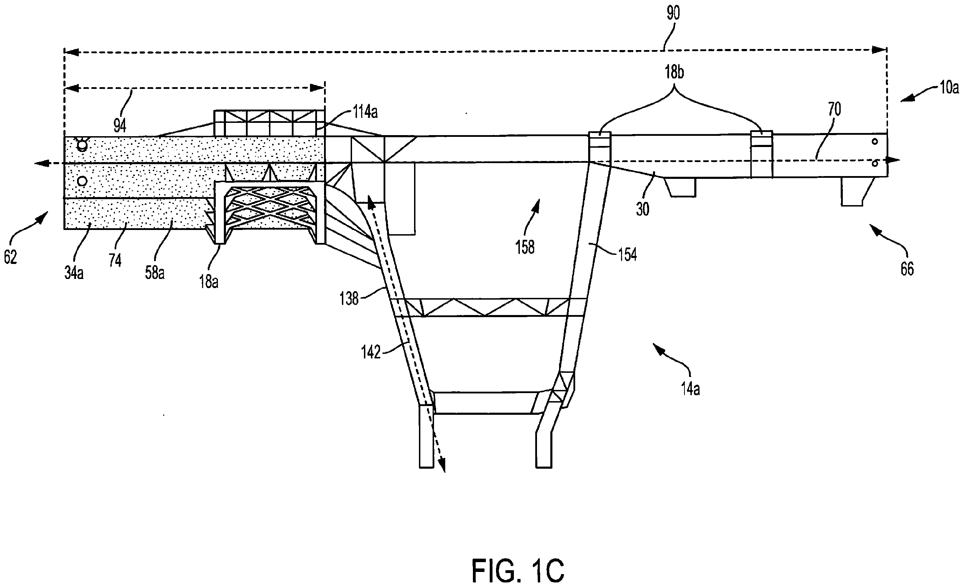

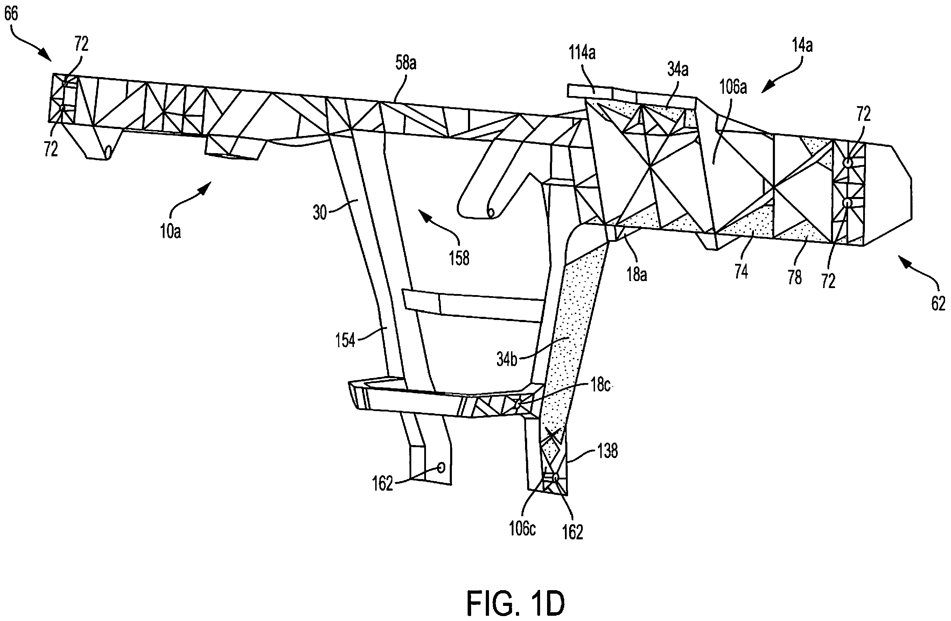

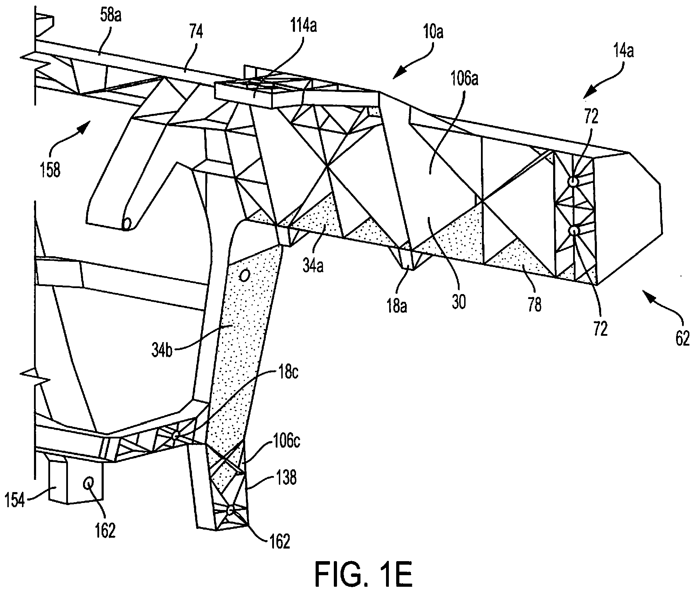

Referring now to the figures, and more particularly to FIGs. 1A-1E, shown therein and designated by the reference numeral 10a is a first embodiment of the present vehicle cross members. In the embodiment shown, cross member 10a comprises a car cross beam (e.g., for use in a car, truck, other vehicle, and/or the like). For example, in this embodiment, cross member 10a is configured to be coupled to a vehicle to provide support for certain vehicle component(s), such as, for example, a dash, steering column, instrument panel, heating ventilation and air conditioning (HVAC) component, air bag, and/or the like. To illustrate, in the depicted embodiment, cross member 10a, and more particularly body 14a (described in more detail below), defines one or more mounts (e.g., 18a, 18b, 18c, 18d, and/or the like), each of which is configured to support one or more of various vehicle components; for example, in the embodiment shown, mount 18a is configured to be coupled to a steering column, mount 18b is configured to be coupled to an airbag housing or carrier component, and mounts 18c and 18d are each configured to be coupled to a user-operable accessory (e.g., HVAC component, radio, and/or the like). Of course, other embodiments of the present vehicle cross members may comprise any suitable cross member, such as, for example, a front bulkhead, rear bulkhead, A-pillar, B-pillar, C-pillar, D-pillar, bumper beam, door beam, or the like.

In this embodiment, cross member 10a includes a composite body 14a. Body 14a may be a composite in that the body comprises two or more materials combined to form a unitary structure. For example, in the depicted embodiment, body 14a comprises a plastic material 30 (e.g., a thermoplastic material, such as, for example, polypropylene, polyamide 6, polyamide 66, polycarbonate/polybutylene succinate, and/or the like, a thermoset material, and/or the like), and one or more laminates (e.g., 34a and 34b, in this embodiment), where the plastic material is overmolded onto at least one of the one or more laminates, the plastic material is in intimate contact with at least one of the one or more laminates, at least one of the one or more laminates is at least partially disposed within the plastic material, and/or the like. As used in this disclosure, "plastic material" may include a plastic having a plurality of dispersed non-plastic elements (e.g., fibers). For example, certain embodiments may include a plastic with a plurality of dispersed, discontinuous or short fibers (e.g., carbon fibers, glass fibers, basalt fibers, and/or the like). By way of illustration, in embodiments in which a plastic with dispersed fibers is injected into a mold to simultaneously form both: (1) the plastic material of one of the present vehicle cross members; and (2) a matrix material of a laminate of the vehicle cross member, the fibers dispersed in the plastic may comprise the same material as fibers in the laminate, but the fibers dispersed in the plastic will be injected with the plastic rather than being arranged in the layered configuration of the laminate. For clarity, "plastic material" is used to indicate the inclusion of plastic, rather than physical plasticity.

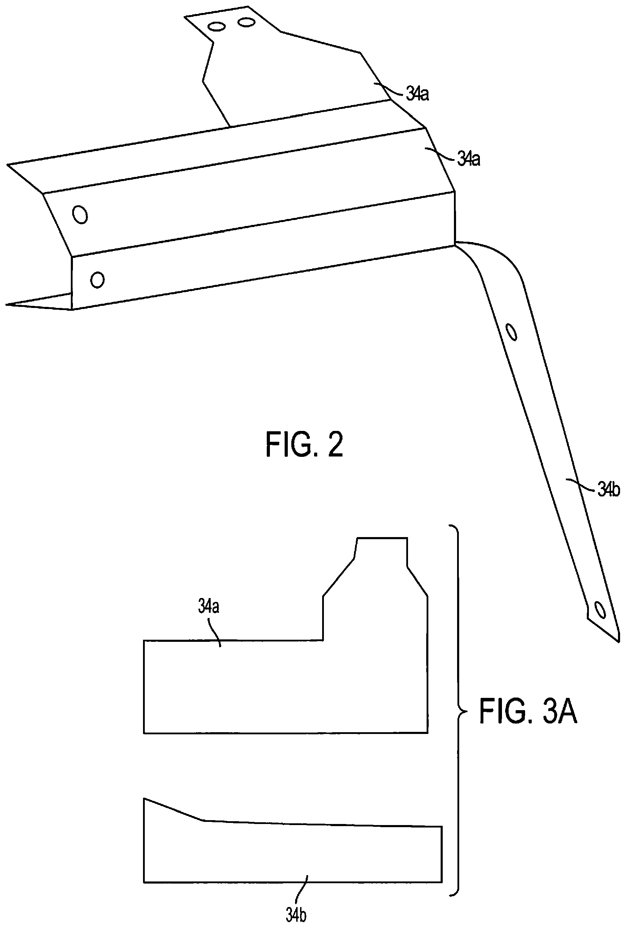

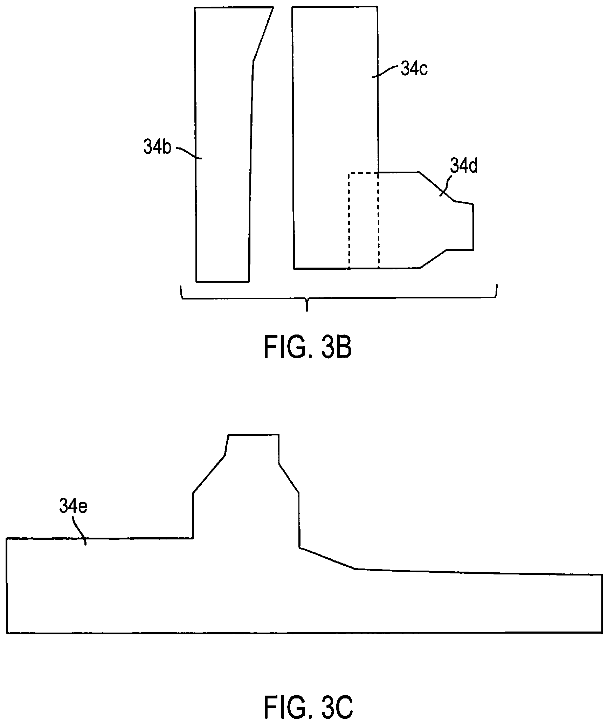

FIGs. 2-3A depict laminates 34a and 34b of vehicle cross member 10a. In the embodiment shown, laminate 34a is configured (e.g., sized and dimensioned) to be at least partially disposed along elongated beam 58a and at least partially disposed along first support 114a, and laminate 34b is configured (e.g., sized and dimensioned) to be at least partially disposed along second support 138 (e.g., as described in more detail below). Other embodiments may comprise any suitable number of laminates (e.g., 1, 2, 3, 4, 5, 6, 7, 8, 9, 10, or more laminates), each of which may be configured to be at least partially disposed along any suitable portion of a vehicle cross member (e.g., 10a). For example, FIGs. 3B and FIG. 3C depict laminate(s) that may be suitable for use in some embodiments of the present vehicle cross members. FIG. 3B depicts laminates 34c and 34d, where laminate 34c is configured (e.g., sized and dimensioned) to be at least partially disposed along an elongated beam (e.g., 58a), and laminate 34d is configured (e.g., sized and dimensioned) to be at least partially disposed along the elongated beam and a first support (e.g., 114a). As shown in FIG. 3B, at least one of laminates 34c and 34d is configured to overlap the other such that the laminates define a total area that substantially matches an area defined by laminate 34a. FIG. 3C depicts a laminate 34e, which is configured (e.g., sized and dimensioned) to be at least partially disposed along an elongated beam (e.g., 58a), a first support (e.g., 114a), and a second support (e.g., 138). In this embodiment, laminate 34e defines an area that substantially matches a total area defined by laminates 34a and 34b and/or laminates 34b, 34c, and 34d (e.g., when placed in an operative, potentially overlapping fashion).

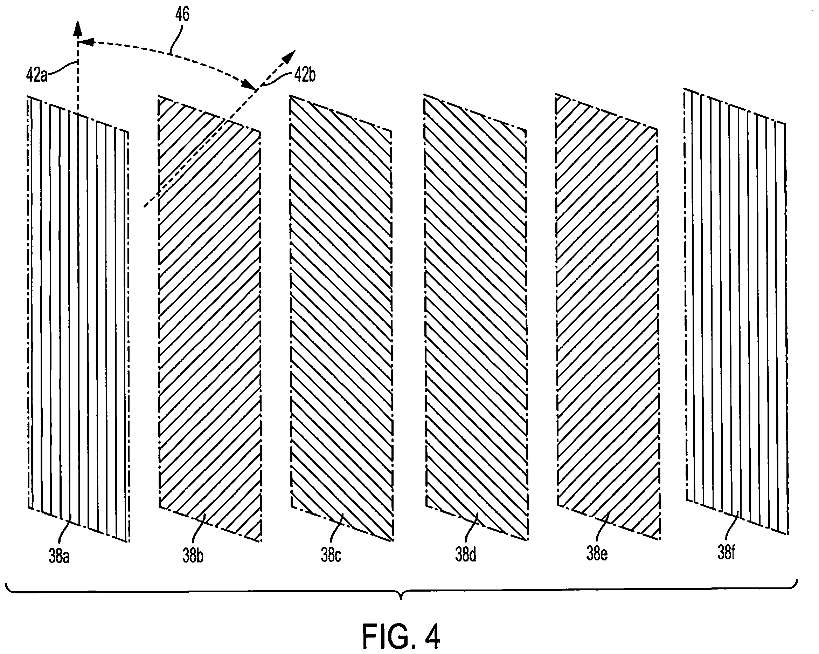

FIG. 4 depicts additional details of at least some of the present laminates. Laminates 34a and 34b (and laminates 34c, 34d, 34e, 34f, 34g, 34h, 34i, and/or the like of other embodiments) are laminates in that each may be formed from one or more layers of material (e.g., 38a, 38b, 38c, 38d, 38e, 38f, and/or the like) that may be joined together. For example, as shown in FIG. 4, at least one of (e.g., each of) laminates 34a and 34b includes a layer of material (e.g., 38a) that comprises fibers, such as, for example, carbon fibers, glass fibers, basalt fibers, cloth fibers (e.g., fabric), and/or the like. Fibers within a layer of material (e.g., 38a) may be continuous or long and/or discontinuous or short (e.g., and such fibers may or may not extend completely across the layer of material, as shown for each layer of material depicted in FIG. 4). In the depicted embodiment, fibers within a layer of material (e.g., 38a) of a laminate (e.g., 34a) and/or layers of material (e.g., 38a and 38b) within the laminate may be joined together using any suitable matrix material, such as, for example, plastic material 30, epoxy, (e.g., thermoplastic) resin, and/or the like (e.g., by dispersing or placing fibers of each layer of material within the matrix material). To illustrate, in the embodiment shown, at least one of (e.g., each of) laminates 34a and 34b comprises from 30% to 70% fibers by volume and/or between 10% to 70% fibers by weight.

One or more laminates (e.g., 34a and 34b, in this embodiment) of the present vehicle cross members (e.g., 10a) may each include any suitable number of layers of material (e.g., 38a) (e.g., 1, 2, 3, 4, 5, 6, 7, 8, 9, 10, or more layers of material), and each layer of material of the laminate may include fibers that are aligned in any suitable direction (e.g., which may be defined relative to a longitudinal axis and/or long dimension of the layer of material and/or the laminate, relative to fibers in other layer(s) of material of the laminate, relative to a longitudinal axis of a support or beam along which the laminate is disposed, and/or the like). For example, in this embodiment, at least one of (e.g., each of) laminates 34a and 34b comprises a first layer of material 38a having fibers aligned in a first direction 42a and a second layer of material 38b having fibers aligned in a second direction 42b. In the depicted embodiment, first direction 42a is angularly disposed relative to second direction 42b by an angle 46 of from 0 to 90 degrees (e.g., from 10 to 80 degrees, from 20 to 70 degrees, from 30 to 60 degrees, from 40 to 50 degrees, and/or the like). More particularly, in the embodiment shown, at least one of (e.g., each of) laminates 34a and 34b comprises six layers of material, 38a-38f, each having fibers oriented at an angle of approximately 0, 45, - 45, -45, 45, and 0 degrees, respectively, relative to a longitudinal axis and/or long dimension of the layer of material and/or the laminate, relative to a longitudinal axis of a support or beam along which the laminate is disposed (e.g., longitudinal axis 70 of elongated beam 58a, longitudinal axis 118 of first support 114a, longitudinal axis 142 of second support 138, and/or the like), and/or the like. While layers of material 38a-38f are shown in a symmetrical stacking order (e.g., to facilitate manufacturing of a laminate, enhance the ability of an assembled laminate to lay flat, and/or the like); in other embodiments, laminates (e.g., 34a, 34b, 34c, 34d, 34e, 34f, 34g, 34h, 34i and/or the like) may include layers of material (e.g., 38a-38f) that are stacked or configured to be stacked in any suitable order, including an asymmetric order. In these ways and others, laminate(s) (e.g., 34a, 34b, 34c, 34d, 34e, 34f, 34g, 34h, 34i, and/or the like) of the present vehicle cross members (e.g., 10a, 10b, 10c, and/or the like) may be configured to provide for enhanced structural efficiency, capability to handle torsion and/or bending loads, resistance to creep and fatigue, and/or the like.

One or more laminates (e.g., 34a and 34b, in this embodiment) of the present vehicle cross members (e.g., 10a) may include layer(s) of material that each have any suitable thickness (e.g., which may be varied based, at least in part, on the composition of the layer(s)). For example, in this embodiment, layers of material 38a-38f may each comprise carbon fibers, with layer of material 38a having a thickness of approximately 0.5 mm, layer of material 38b having a thickness of approximately 0.25 mm, layer of material 38c having a thickness of approximately 0.25 mm, layer of material 38d having a thickness of approximately 0.25 mm, layer of material 38e having a thickness of approximately 0.25 mm, and layer of material 38f having a thickness of approximately 0.5 mm. For further example, in the depicted embodiment, layers of material 38a-38f may each comprise glass fibers, with layer of material 38a having a thickness of approximately 0.75 mm, layer of material 38b having a thickness of approximately 0.5 mm, layer of material 38c having a thickness of approximately 0.5 mm, layer of material 38d having a thickness of approximately 0.5 mm, layer of material 38e having a thickness of approximately 0.5 mm, and layer of material 38f having a thickness of approximately 0.75 mm.

In the embodiment shown in FIGs. 1A-1E, body 14a of vehicle cross member 10a defines an elongated beam 58a extending between a first end 62 and a second end 66 and having a longitudinal axis 70. In the depicted embodiment, elongated beam 58a is configured to be coupled to a vehicle at each of first end 62 and second end 66. For example, in the embodiment shown, at least one of first end 62 and second end 66 (e.g., each of the first and second ends, in this embodiment) defines one or more openings 72 (e.g., holes, slots, recesses, and/or the like) into elongated beam 58a for securing the elongated beam to a vehicle (e.g., via one or more fasteners, each disposed into the vehicle and at least partially through one of the one or more openings). In at least this way, some embodiments of the present vehicle cross members (e.g., 10a) may be configured to be mounted to a vehicle at one or more locations (e.g., at first end 62 and/or second end 66 of elongated beam 58a) without requiring additional, separate mounting components (other than fasteners) such as, for example, flanges, mounts, and/or plates (e.g., providing for reduced manufacturing costs, assembly time, and/or the like).

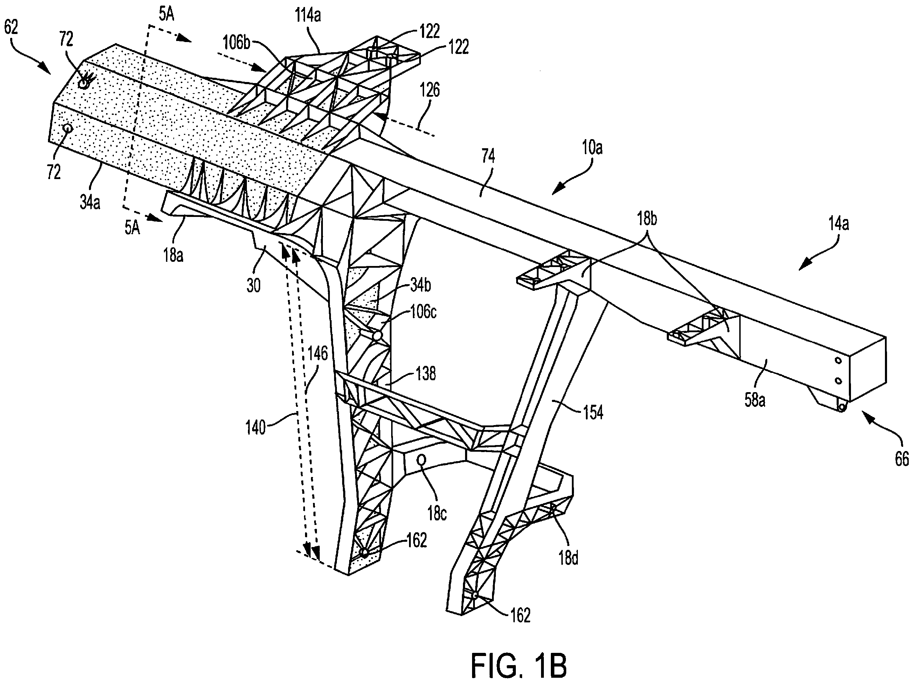

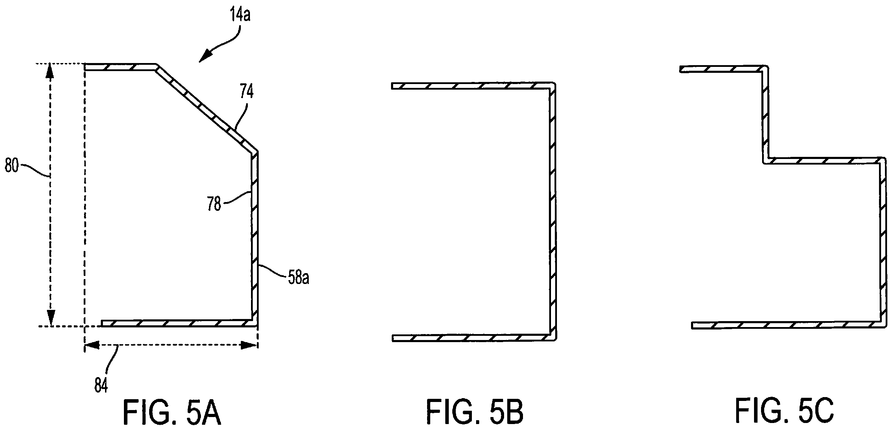

FIG. 5A depicts a cross-sectional view of elongated beam 58a taken along line 5A-5A of FIG. 1B. As shown, in this embodiment, elongated beam 58a defines an open cross-section. For example, as shown, elongated beam 58a includes a sidewall 74 defining an open channel 78 that extends along the elongated beam (e.g., though the channel may be interrupted by one or more ribs, such as ribs 106a that may extend from the sidewall and into the channel, as described in more detail below). In the embodiment shown, the cross-section defined by sidewall 74 may vary along elongated beam 58a (e.g., based on stiffness, strength, space, component mounting, and/or the like requirements). For example, in this embodiment, the cross-section defined by sidewall 74 near first end 62 may have a larger transverse height 80 and/or transverse width 84 than the cross-section defined by sidewall 74 near second end 66 (e.g., to resist bending and/or torsion loads applied to elongated beam 58a by a steering column, and/or the like). Other embodiments of the present vehicle cross members may comprise an elongated beam (e.g., 58a) with a sidewall (e.g., 74) that defines any suitable cross-section, examples of which are shown in FIGS. 5B and 5C, with rounded and/or straight sides (e.g., which may facilitate proper placement of laminate(s) relative to the elongated beam, within a mold configured to form the elongated beam, and/or the like).

Referring back to FIGs. 1A-1E, in the embodiment shown, at least one of one or more laminates (e.g., 34a, in the embodiment shown) is at least partially disposed along elongated beam 58a (e.g., in a direction along longitudinal axis 70 of the elongated beam). In this embodiment, at least a portion of laminate 34a is disposed along elongated beam 58a such that the at least a portion of the laminate overlies, underlies, defines, and/or is disposed within a majority of (e.g., up to and including all of) sidewall 74 of at least a portion of the elongated beam (e.g., thereby increasing a stiffness or strength of the at least a portion of the elongated beam). In the depicted embodiment, at least one of one or more openings 72 of elongated beam 58a extends through laminate 34a (e.g., thereby increasing a strength of the elongated beam at the mounting location of the elongated beam to a vehicle). However, in other embodiments, each of one or more openings (e.g., 72) may extend through only a plastic material (e.g., 30) and/or not through a laminate.

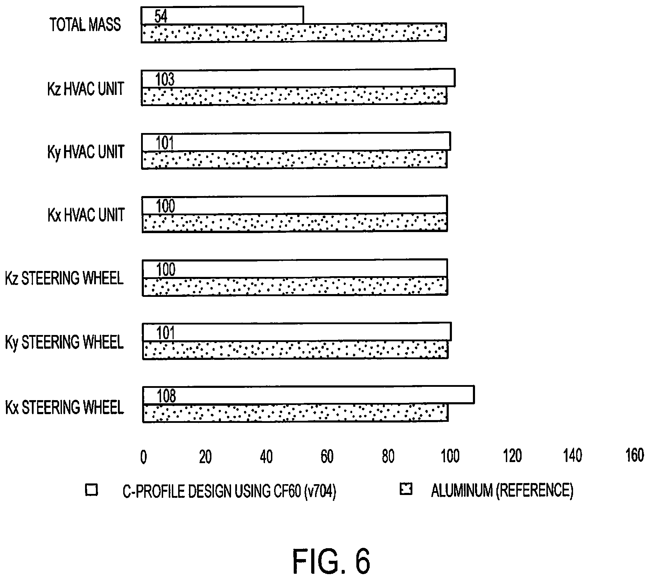

In the depicted embodiment, elongated beam 58a extends a length 90 between first end 62 and second end 66, and one or more laminates disposed along the elongated beam (e.g., 34a, in this embodiment) span a total distance 94 along the elongated beam that is less than 50% of the length (e.g., 10, 15, 20, 25, 30, 35, 40, 45 percent or more of the length). Plastic material (e.g., 30) may be generally less expensive than one or more laminates (e.g., 34a and 34b); thus, in at least this way, some embodiments of the present vehicle cross members (e.g., 10a) may provide for reduced manufacturing costs (e.g., without undesirably compromising structural characteristics of the cross members, such as, for example, stiffness, as shown and described below with reference to FIG. 6). In the depicted embodiment, one or more laminates disposed along elongated beam 58a (e.g., 34a, in the depicted embodiment) are disposed closer to first end 62 than to second end 66 (e.g., are disposed at the first end of the elongated beam); in at least this way, the one or more laminates may be disposed along the elongated beam to resist bending and/or torsion loads applied to the elongated beam by a steering column, and/or the like.

In the embodiment shown, plastic material 30 defines a plurality of ribs 106a extending from sidewall 74 of elongated beam 58a, at least some of which may extend from the sidewall and into channel 78 and at least some of which may extend from the sidewall and away from the channel (e.g., such as ribs supporting mount 18a). As shown, in this embodiment, at least some of ribs 106a may extend from sidewall 74 in a direction that is substantially perpendicular to the sidewall and/or substantially perpendicular to a plane defined by one or more laminates disposed along the sidewall (e.g., 34a, in the depicted embodiment) (e.g., thereby promoting structural efficiency).

In the depicted embodiment, body 14a defines a first support 114a extending from elongated beam 58a and having a longitudinal axis 118. In the embodiment shown, first support 114a extends from elongated beam 58a at a location between first end 62 and second end 66 (e.g., at a location closer to the first end than to the second end). In this embodiment, first support 114a is configured to secure elongated beam 58a relative to a vehicle. For example, in the depicted embodiment, first support 114a defines one or more openings 122 (e.g., holes, slots, recesses, and/or the like) for securing the first support to a vehicle (e.g., to or proximate to a firewall of the vehicle) (e.g., via one or more fasteners, each disposed into the vehicle and at least partially through one of the one or more openings).

In the embodiment shown, first support 114a is unitary or integrally formed with elongated beam 58a. In at least this way, some embodiments of the present vehicle cross members (e.g., 10a) may be configured to be mounted to a vehicle at one or more locations (e.g., at first support 114a) without requiring additional, separate mounting components (other than fasteners) such as, for example, flanges, mounts, and/or plates (e.g., providing for reduced manufacturing costs, assembly time, and/or the like). However, in other embodiments of the present vehicle cross members, a first support (e.g., 114a) may be a separate component that is couplable (e.g., via welding, bonding, fastener(s), and/or the like) to an elongated beam (e.g., 58a) and/or body (e.g., 14a).

In this embodiment, at least one of one or more laminates (e.g., 34a, in the embodiment shown) is at least partially disposed along first support 114a (e.g., in a direction along longitudinal axis 118 of the first support). For example, in the depicted embodiment, laminate 34a is at least partially disposed along first support 114a and at least partially disposed along elongated beam 58a (e.g., and may include layers of material having fibers aligned relative to longitudinal axis 70 of elongated beam 58a or aligned relative to longitudinal axis 118 of first support 114a, as described above). Nevertheless, in this and other embodiments of the present vehicle cross members, a first laminate may be at least partially disposed along an elongated beam (e.g., 58a) and not disposed along a first support (e.g., 114a) and/or a second laminate may be at least partially disposed along the first support and not disposed along the elongated beam (e.g., the elongated beam and the first support may include separate laminates).

In the depicted embodiment, first support 114a extends a length 116 (e.g., measured along longitudinal axis 118), and one or more laminates disposed along the first support (e.g., 34a, in this embodiment) span a total distance 120 along the first support that is 50% or more of the length (e.g., 50, 55, 60, 65, 70, 75, 80, 85, 90, 95, or 100 percent of the length) (FIG. 1A). In the embodiment shown, at least a portion of laminate 34a is at least partially disposed along first support 114a such that the at least a portion of the laminate spans a majority of (e.g., up to and including all of) a width 126 of the first support (e.g., thereby increasing a stiffness or strength of the first support). In this embodiment, at least one of one or more openings 122 of first support 114a extends through laminate 34a (e.g., thereby increasing a strength of the first support at the mounting location of the first support to a vehicle). However, in other embodiments, each of one or more openings (e.g., 122) may only extend through a plastic material (e.g., 30) (e.g., and not through a laminate).

In the depicted embodiment, plastic material 30 defines a plurality of ribs 106b extending from first support 114a. As shown, at least some of ribs 106b extend from first support 114a in a direction that is substantially perpendicular to the first support and/or substantially perpendicular to a plane defined by one or more laminates disposed along the first support (e.g., 34a, in the depicted embodiment) (e.g., thereby promoting structural efficiency).

In the embodiment shown, body 14a defines a second support 138 extending from elongated beam 58a and having a longitudinal axis 142. In this embodiment, second support 138 extends from body 14a in a direction away from first support 114a (e.g., the second support may be described as rotated about elongated beam 58a relative to the first support). In this embodiment, body 14a defines a third support 154 extending from elongated beam 58a alongside and spaced from second support 138 such that the elongated beam, second support, and third support cooperate to define a generally U-shaped portion 158 of body 14a. In the depicted embodiment, generally U-shaped portion 158 of body 14a may be configured to receive a portion of a vehicle (e.g., a transmission tunnel), a user-operable accessory (e.g., HVAC component, radio, and/or the like), and/or the like. In the embodiment shown, second support 138 and/or third support 154 is/are configured to secure elongated beam 58a to a vehicle. For example, in this embodiment, second support 138 and/or third support 154 define(s) one or more openings 162 (e.g., holes, slots, recesses, and/or the like) for securing the respective support to a vehicle (e.g., to or proximate to a floor of a vehicle) (e.g., via one or more fasteners, each disposed into the vehicle and at least partially through one of the one or more openings). In this embodiment, second support 138 and/or third support 154 is/are unitary or integrally formed with elongated beam 58a. In at least this way, some embodiments of the present vehicle cross members (e.g., 10a) may be configured to be mounted to a vehicle at one or more locations (e.g., at a second support 138 and/or a third support 154) without requiring additional, separate mounting components (other than fasteners) such as, for example, flanges, mounts, and/or plates (e.g., providing for reduced manufacturing costs, assembly time, and/or the like). However, in other embodiments of the present vehicle cross members, a second support (e.g., 138) and/or a third support (e.g., 154) may be separate component(s) that is/are configured to be coupled to an elongated beam (e.g., 58a) and/or body (e.g., 14a) (e.g., via welding, bonding, fastener(s), and/or the like).

In the depicted embodiment, at least one of one or more laminates (e.g., 34b, in the embodiment shown) is at least partially disposed along second support 138 (e.g., in a direction along longitudinal axis 142 of the second support). In this embodiment, laminate 34b is separate from laminate 34a; nevertheless, in this and other embodiments, a laminate may be at least partially disposed along a second support (e.g., 138) and at least partially disposed along an elongated beam (e.g., 58a) and/or a first support (e.g., 114a) (e.g., laminate 34e of FIG. 3C).

In this embodiment, second support 138 extends a length 140, and one or more laminates disposed along the second support (e.g., 34b, in this embodiment) span a total distance 146 along the second support that is 50% or more of the length (e.g., 50, 55, 60, 65, 70, 75, 80, 85, 90, 95, or 100 percent of the length) (FIG. 1B). In the embodiment shown, at least a portion of laminate 34b is at least partially disposed along second support 138 such that the at least a portion of the laminate spans a majority of (e.g., up to and including all of) a width 166 of the second support (e.g., thereby increasing a stiffness or strength of the second support). In this embodiment, at least one of one or more openings 162 of second support 138 extends through laminate 34b (e.g., thereby increasing a strength of the second support at the mounting location of the second support to a vehicle). However, in other embodiments, each of one or more openings (e.g., 162) may only extend through a plastic material (e.g., 30) (e.g., and not through a laminate).

In the depicted embodiment, no laminate(s) (e.g., 34a and 34b) are disposed along third support 154 (e.g., thereby providing for reduced manufacturing costs without undesirably compromising structural characteristics of the cross members, such as, for example, stiffness, as shown and described below with reference to FIG. 6); however, in other embodiments of the present vehicle cross members, laminate(s) may be at least partially disposed along a third support (e.g., 154).

In the depicted embodiment, plastic material 30 defines a plurality of ribs 106c extending from second support 138 (e.g., and third support 154). As shown, at least some of ribs 106c extend from second support 138 in a direction that is perpendicular to the second support and/or perpendicular to a plane defined by one or more laminates disposed along the second support (e.g., 34b, in the embodiment shown) (e.g., thereby promoting structural efficiency).

As shown in FIG. 6, cross member 10a, despite being more than 40% lighter than a comparable aluminum car cross beam, possesses similar stiffness values to the aluminum car cross beam. Such desirable structural characteristics may be provided, at least in part, by the relatively short portion of elongated beam 58a along which one or more laminates are disposed, which is supported on one end by the vehicle (e.g., via one or more openings 72) and on the other end by first support 114a and/or second support 138 (e.g., one or both of which may include one or more laminates, as described above). Further comparisons between embodiments of cross member 10a (one comprising carbon fiber laminates and one comprising glass fiber laminates) and a comparable aluminum car cross beam are shown in TABLE 1, below.

**TABLE 1: Frequency Comparison between Embodiments of the Present Vehicle Cross Members and a Comparable Aluminum Car Cross Beam**

| **Frequency** | **Cross Member 10a with Carbon Fiber Laminates (Hz)** | **Cross Member 10a with Glass Fiber Laminates (Hz)** | **Comparable Aluminum Car Cross Beam (Hz)** |
|---|---|---|---|
| 1 | 48 | 48 | 43 |
| 2 | 59 | 59 | 56 |
| 3 | 65 | 66 | 59 |
| 4 | 70 | 72 | 68 |
| 5 | 80 | 81 | 71 |

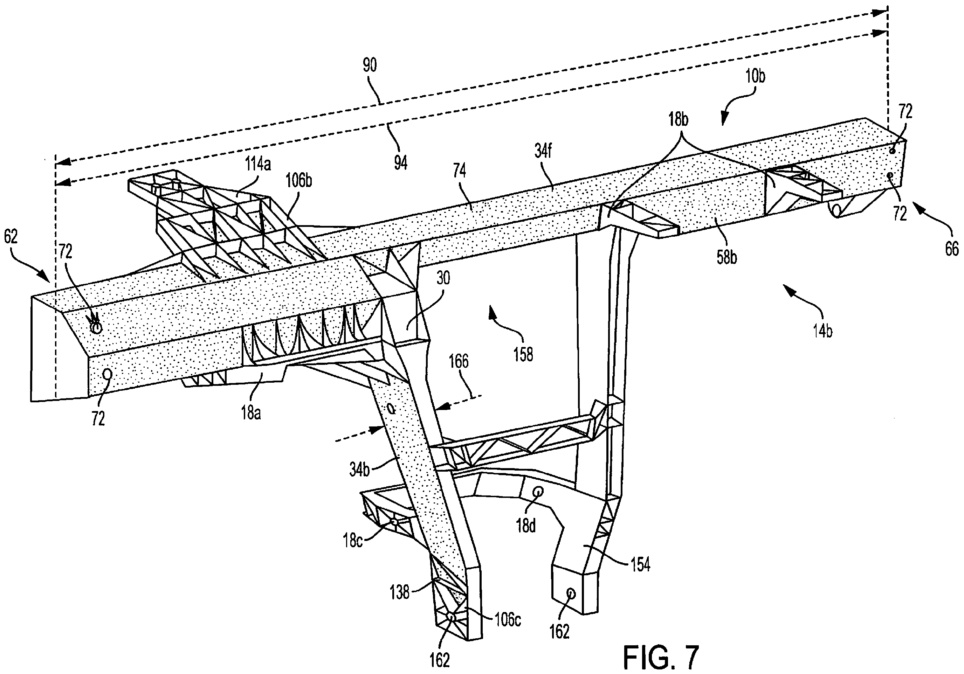

Referring now to FIG. 7, shown therein and designated by the reference numeral 10b is a second embodiment of the present vehicle cross members. Cross member 10b may be substantially similar to cross member 10a, with the primary exception that one or more laminates (e.g., 34f, which may itself include one or more laminates) disposed along elongated beam 58b of body 14b span a total distance 94 along the elongated beam that is 50% or more of length 90 of the elongated beam (e.g., 55, 60, 65, 70, 75, 80, 85, 90, 95, or 100 percent of the length).

Some embodiments of the present methods for forming a vehicle cross member (e.g., 10a, 10b, and/or the like) comprise forming, in a mold (e.g., 300, described in more detail below), a composite body (e.g., 14a, 14b, and/or the like). In some embodiments, forming, in the mold, the body comprises forming the one or more laminates (e.g., 34a, 34b, 34c, 34d, 34e, 34f, and/or the like) in the mold. For example, in some embodiments, forming the one or more laminates in the mold comprises placing one or more layers of material (e.g., 38a, 38b, 38c, 38d, 38e, 38f, and/or the like), each comprising fibers, into the mold and overmolding the plastic material onto the one or more layers (e.g., such that body is formed in a one-step process). Some embodiments comprise placing the one or more (e.g., at least partially pre-formed) laminates into the mold and overmolding the plastic material onto the one or more laminates (e.g., such that the body is formed in a two-step process).

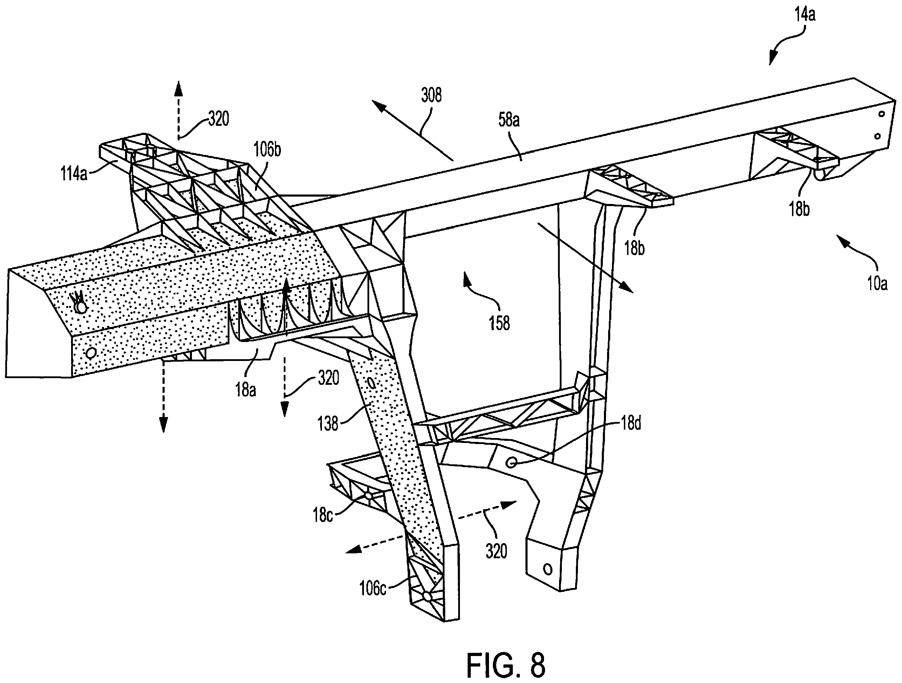

FIG. 8 depicts features related to some embodiments of the present methods. As described above, to promote structural efficiency, it may be desirable for one or more ribs to extend from a structure in a direction that is generally perpendicular to that structure. Taking cross member 10a by way of example, at least some of ribs 106a may extend substantially perpendicularly from elongated beam 58a, at least some of ribs 106b may extend substantially perpendicularly from first support 114a, and at least some of ribs 106c may extend substantially perpendicularly from second support 138, and/or the like. Due, at least in part, to such rib placement and/or the orientations of elongated beam 58a, first support 114a, second support 138, mounts 18a-18d, and/or the like relative to one another, a mold with a single mold opening direction may be incapable of forming cross member 10a (e.g., due to undercut geometry that may be present in cross member 10a). Therefore, in some embodiments, the mold comprises one or more sliders (e.g., 316, described in more detail below), each having a slider opening direction (e.g., 320), where the slider opening direction of at least one of the one or more sliders is angularly disposed (e.g., substantially perpendicular) relative to an opening direction of the mold (e.g., 308). In at least this way, some embodiments of the present vehicle cross members (e.g., 10a) may be molded in a single mold, in a one shot, one step (e.g., where laminate(s) are formed in the mold), and/or two-step molding process (e.g., where at least partially pre-formed laminates are placed in the mold).

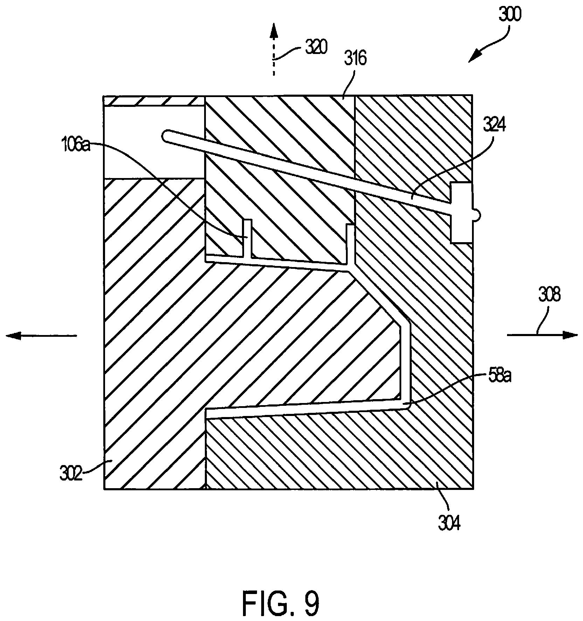

For example, FIG. 9 depicts a schematic of an illustrative mold 300 including a slider 316. As shown, mold 300 includes a first mold portion 302 and a second mold portion 304 that are movable relative to one another along mold opening direction 308. In this example, as first mold portion 302 and second mold portion 304 move relative to one another along mold opening direction 308, slider 316 moves relative to the first mold portion and second mold portion along slider opening direction 320 (e.g., guided by locking pin 324, which is disposed through the slider). Thus, slider 316 may allow mold 300 to mold undercut geometry resulting from ribs 106a extending from elongated beam 58a (e.g., as shown).

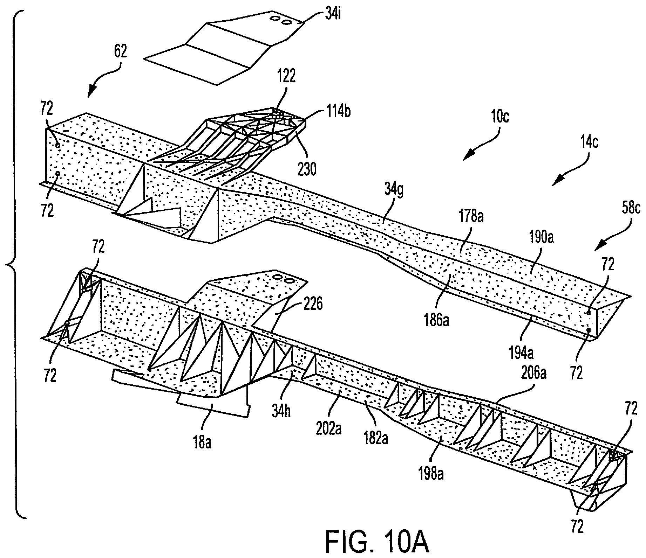

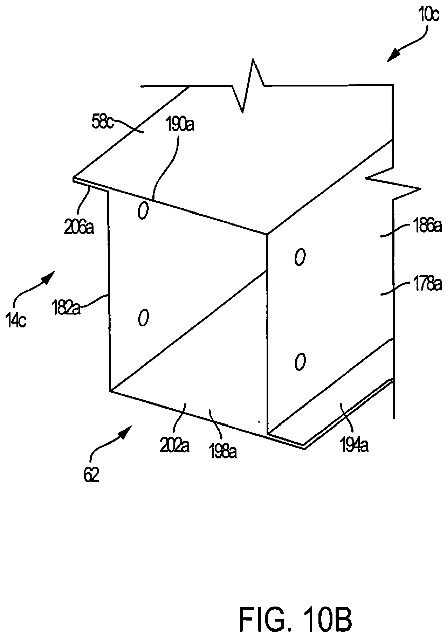

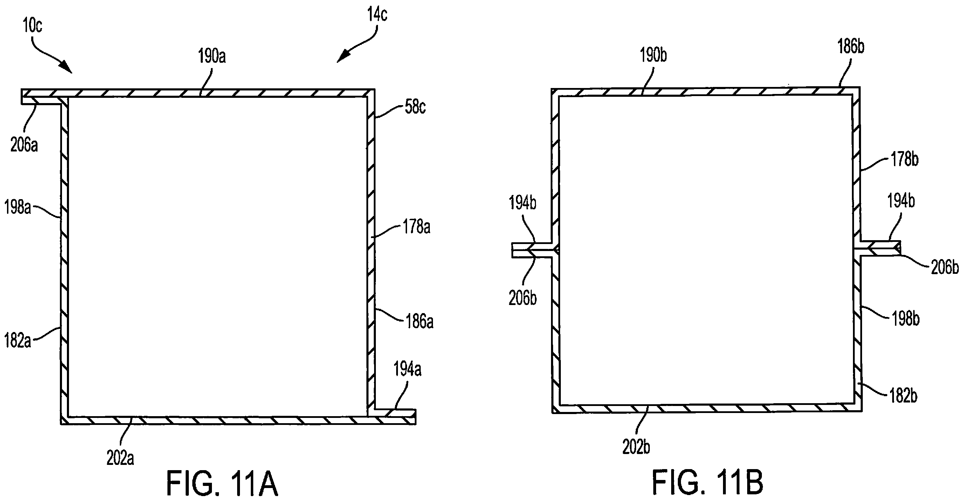

Referring now to FIGs. 10A, 10B, and 11A shown therein and designated by the reference numeral 10c is a third embodiment of the present vehicle cross members. Cross member 10c may be substantially similar to cross member 10b, with the primary exception that cross member 10c includes an elongated beam 58c having a closed-cross section and formed from two elongated members, a first elongated member 178a and a second elongated member 182a. In the depicted embodiment, at least one of (e.g., both of) first elongated member 178a and second elongated member 182a may be defined by a composite body including a plastic material 30 and one or more laminates (e.g., as described above for cross members 10a and 10b). For example, in the embodiment shown, one or more laminates disposed along first elongated member 178a (e.g., 34g, which may itself comprise one or more laminates) and/or second elongated member 182a (e.g., 34h, which may itself comprise one or more laminates) span a total distance along the first and/or second elongated members that is 50% or more of a length of the first and/or second elongated members (e.g., 55, 60, 65, 70, 75, 80, 85, 90, 95, or 100 percent of the length) (e.g., similarly to cross member 10a); however, in other embodiments, one or more laminates disposed along a first elongated member (e.g., 178a) (e.g., 34g) and/or second elongated member (e.g., 182a) (e.g., 34h) may span a total distance along the first and/or second elongated members that is less than 50% of a length of the first and/or second elongated members (e.g., similarly to cross member 10b).

While cross member 10c does not include a second support (e.g., 138) or a third support (e.g., 154), such support(s) (along with any other suitable support(s)) may be present (e.g., extending from a second elongated member 182a) in other embodiments of the present vehicle cross members that are otherwise the same as or similar to cross member 10c.

As mentioned above, in the embodiment shown, cross member 10c includes a first elongated member 178a and a second elongated member 182a. In this embodiment, first elongated member 178a includes a sidewall 186a defining an interior channel 190a and a flange 194a extending away from the interior channel. Likewise, in the depicted embodiment, second elongated member 182a includes a sidewall 198a defining an interior channel 202a and a flange 206a extending away from the interior channel. In the embodiment shown, elongated beam 58c may be formed by coupling (e.g., via welding, bonding, fastener(s), and/or the like) flange 194a of first elongated member 178a to second elongated member 182a (e.g., to sidewall 198a within interior channel 202a, as shown) and/or coupling (e.g., via welding, bonding, fastener(s), and/or the like) flange 206a of the second elongated member to the first elongated member (e.g., to sidewall 186a within interior channel 190a, as shown).

In this embodiment, each of elongated members 178a and 182a comprises a generally Z-shaped cross-section, due in part to respective flanges 194a and 206a that are located and extend from only one end of respective sidewalls 186a and 198a (e.g., as shown in FIG. 11A). However, other embodiments of the present vehicle cross members may comprise elongated members (e.g., 178a, 182a, and/or the like) having any suitable cross-section. For example, and referring to FIG. 11B, first elongated member 178b includes a sidewall 186b defining a flange 194b at a first end that extends away from interior channel 190b and a flange 194b at a second, opposing end that that extends away from the interior channel (e.g., elongated member 178b comprises a generally hat-shaped cross-section). Similarly, second elongated member 182b includes a sidewall 198b defining a flange 206b at a first end that extends away from interior channel 202b and a flange 206b at a second, opposing end that extends away from the interior channel (e.g., elongated member 182b comprises a generally hat-shaped cross-section). As shown, flanges 194b and 206b may be coupled together (e.g., via welding, bonding, fastener(s), and/or the like) to form an elongated beam.

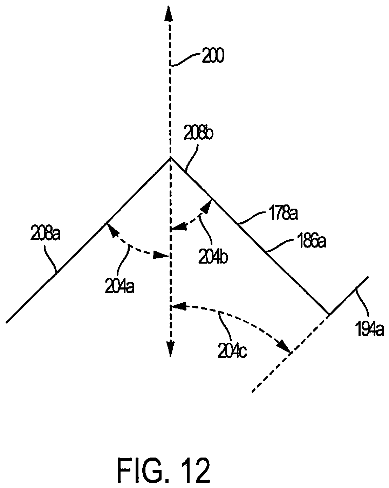

FIG. 12 depicts features related to some embodiments of the present methods. As shown, the generally Z-shaped cross-section of first and second elongated members, 178a and 182a, respectively, may facilitate molding of the first and second elongated members by allowing each elongated member to be formed in a mold such that the smallest angle between each portion of its respective sidewall, 186a or 198a (including respective flange 194a or 206a), and a mold opening axis 200 of a mold is at least 15 degrees (e.g., from 40 to 45 degrees), thereby promoting an even distribution of molding pressure to each portion of the sidewall, thus mitigating the occurrence of surface defects, voids, and/or the like. To illustrate, in the depicted example, a smallest angle 204a between sidewall portion 208a and mold opening axis 200 is approximately 45 degrees, a smallest angle 204b between sidewall portion 208b and the mold opening direction is approximately 45 degrees, and a smallest angle 204c between flange 194a and the mold opening direction is approximately 45 degrees.

In the depicted embodiment, first support 114b may be defined by a lower first support portion 226 and an upper first support portion 230. For example, in the embodiment shown, upper first support portion 230, which may be unitary or integrally formed with first elongated member 178a, may be coupled (e.g., via welding, bonding, fastener(s) and/or the like) to lower first support portion 226, which may be unitary or integrally formed with second elongated member 182a. As shown, in this embodiment, one or more laminates (e.g., 34i, which may itself comprise one or more laminates) may be at least partially disposed along upper first support portion 230 and/or lower first support portion 226.

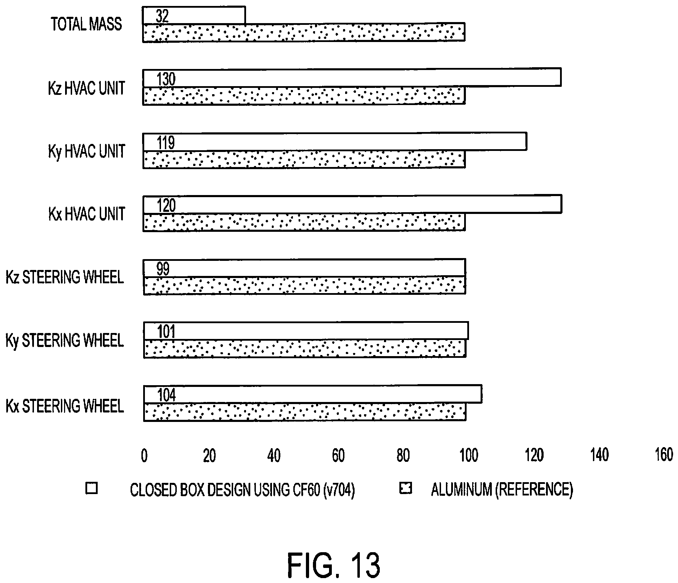

As shown in FIG. 13, cross member 10c, despite being more than 40% lighter than a comparable aluminum car cross beam, possesses similar stiffness values to the aluminum car cross beam.

Some embodiments of the present methods for forming a vehicle cross member (e.g., 10c) comprise forming, in a mold, a first elongated member (e.g., 178a, 178b, and/or the like) having a sidewall (e.g., 186a, 186b, and/or the like) defining an interior channel (e.g., 190a, 190b, and/or the like) and one or more flanges (e.g., 194a, 194b, and/or the like), forming, in a mold, a second elongated member (182a, 182b, and/or the like) having a sidewall (e.g., 198a, 198b, and/or the like) defining an interior channel (e.g., 202a, 202b, and/or the like) and one or more flanges (e.g., 206a, 206b, and/or the like) extending away from the interior channel, and forming an elongated beam (e.g., 58c) by coupling at least one of the one or more flanges of the first elongated member to the second elongated member and coupling at least one of the one or more flanges of the second elongated member to the first elongated member, where at least one of the first elongated member and the second elongated member is defined by a composite body comprising a plastic material (e.g., 30) and one or more laminates (e.g., 34g, 34h, and/or the like) and where at least one of the one or more laminates is at least partially disposed along the at least one of the first elongated member and the second elongated member. In some embodiments, the coupling comprises welding.

In some embodiments, forming, in the mold, the first elongated member is such that a smallest angle (e.g., 204a, 204b, 204c, and/or the like) between each portion of the sidewall (e.g., 208a, 208b, 194a, and/or the like) of the first elongated member and an opening axis (e.g., 200) of the mold is at least 15 degrees. In some embodiments, forming, in the mold, the first elongated member is such that the smallest angle between each portion of the sidewall of the first elongated member and the opening axis of the mold is from 40 to 50 degrees.

In some embodiments, each of the first elongated member and the second elongated member is defined by a composite body comprising a plastic material (e.g., 30) and one or more laminates (e.g., 34g, 34h, and/or the like), at least one of the one or more laminates of the composite body defining the first elongated member (e.g., 34g) is at least partially disposed along the first elongated member, and at least one of the one or more laminates of the composite body defining the second elongated member (e.g., 34h) is at least partially disposed along the second elongated member.

In some embodiments, forming the elongated beam comprises coupling at least one of the one or more flanges (e.g., 194a) of the first elongated member (e.g., 178a) to the sidewall (e.g., 198a) of the second elongated member (e.g., 182a) within the interior channel (e.g., 202a) and coupling at least one of the one or more flanges (e.g., 206a) of the second elongated member (e.g., 182a) to the sidewall (e.g., 186a) of the first elongated member within the interior channel (e.g., 190a). In some embodiments, a first end of the sidewall (e.g., 186b) of the first elongated member (e.g., 178b) defines a first flange (e.g., 194b), and a second end of the sidewall of the first elongated member defines a second flange (e.g., 194b), a first end of the sidewall (e.g., 198b) of the second elongated member (e.g., 182b) defines a first flange (e.g., 206b), and a second end of the sidewall of the second elongated member defines a second flange (e.g., 206b), and forming the elongated beam comprises coupling the first flange of the first elongated member to the first flange of the second elongated member and coupling the second flange of the first elongated member to the second flange of the second elongated member.

Some embodiments of the present kits comprise one or more laminates (e.g., 34a, 34b, 34c, 34d, 34e, 34f, 34g, 34h, 34i, and/or the like) and/or one or more layers of material (e.g., 38a, 38b, 38c, 38d, 38e, 38f, and/or the like). Such laminate(s) and/or layer(s) may be pre-cut into suitable shape(s) (e.g., as shown in FIGs. 3A-3C), pre-assembled, and/or preimpregnated to facilitate manufacture of vehicle cross members (e.g., 10a, 10b, 10c, and/or the like).

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A vehicle cross member [10a-c] comprising:
a composite body [14a] comprising:
a plastic material [30]; and
one or more laminates [34a-i];
wherein the body [14a] defines an elongated beam [58a] extending a length [90] between a first end [62] and a second end [66];
wherein at least one of the one or more laminates [34a-i] is at least partially disposed along the elongated beam [58a]; and
wherein the at least one of the one or more laminates [34a-i] at least partially disposed along the elongated beam [58a] span a total distance [94] along the elongated beam [58a] that is less than 50% of the length of the elongated beam [58a].

2. The vehicle cross member [10a-c] of claim 1, wherein:
- the body [14a] defines a first support [114a] unitary with and extending from the elongated beam [58a]; or
- the body [14a] defines a first support unitary [114a] with and extending from the elongated beam [58a], and at least one of the one or more laminates [34a-i] is at least partially disposed along the elongated beam [58a] and at least partially disposed along the first support [114a].

3. A vehicle cross member [10a-c] comprising:
a composite body [14a] comprising:
a plastic material [30]; and
one or more laminates [34a-i];
wherein the body [14a] defines:
an elongated beam [58a] extending between a first end [62] and a second end [66]; and
a first support [114a] unitary with and extending from the elongated beam [58a]; and
wherein at least one of the one or more laminates [34a-i] is at least partially disposed along the elongated beam [58a] and at least partially disposed along the first support [114a].

4. The vehicle cross member [10a-c] of claim 3, wherein:
- the at least one of the one or more laminates [34a-i] at least partially disposed along the elongated beam [58a] span a total distance [94] along the elongated beam [58a] that is less than 50% of a length of the elongated beam [58a] between the first and second ends [62,66]; or
- the at least one of the one or more laminates [34a-i] at least partially disposed along the elongated beam [58a] span a total distance [94] along the elongated beam [58a] that is 50% or more of a length of the elongated beam [58a] between the first and second ends [62,66].

5. The vehicle cross member [10a-c] of any of claims 1-4, wherein at least one of the first end [62] and the second end [66] of the elongated beam [58a] defines one or more openings [72] into the elongated beam [58a] for securing the elongated beam [58a] to a vehicle.

6. The vehicle cross member [10a-c] of claim 5, wherein at least one of the one or more openings [72] extends through at least one of the one or more laminates [34a-i].

7. The vehicle cross member [10a-c] of any of claims 2-4, wherein:
the body [14a] defines a second support [138] unitary with and extending from the elongated beam [58a] and away from the first support [114a]; and
at least one of the one or more laminates [34a-i] is at least partially disposed along the second support [138].

8. The vehicle cross member [10a-c] of claim 7, wherein:
at least one of the one or more laminates [34a-i] is at least partially disposed along the second support [138] and at least partially disposed along the elongated beam [58a]; and/or
at least one of the one or more laminates [34a-i] is at least partially disposed along the second support [138] and at least partially disposed along the first support [114a].

9. The vehicle cross member [10a-c] of any of claims 1-4, wherein:
the body defines a second support [138] unitary with and extending from the elongated beam [58a]; and
at least one of the one or more laminates [34a-i] is at least partially disposed along the second support [138].

10. The vehicle cross member [10a-c] of claim 9, wherein at least one of the one or more laminates [34a-i] is at least partially disposed along the elongated beam [58a] and at least partially disposed along the second support [138].

11. The vehicle cross member [10a-c] of any of claims 1-4, wherein:
- the elongated beam [58a] defines an open cross-section; or
- the elongated beam [58a] defines a closed cross-section; or
- at least one of the one or more laminates [34a-i] comprises a layer of material [38a-f] comprising fibers; or
- at least one of the one or more laminates [34a-i] comprises a layer of material comprising fibers, and at least one of the one or more laminates [34a-i] comprises a matrix material comprising the plastic material [30].

12. A method for forming a vehicle cross member [10a-c], comprising:
forming, in a mold [300], the composite body [14a] of any of claims 1-4.

13. The method of claim 12, wherein forming, in the mold [300], the body comprises forming the one or more laminates [34a-i] in the mold [300].

14. The method of claim 13, wherein forming the one or more laminates [34a-i] in the mold [300] comprises:
placing one or more layers [38a-f], each comprising fibers, into the mold [300]; and
overmolding the plastic material [30] onto the one or more layers [38a-f].

15. The method of claim 12, comprising:
placing the one or more laminates [34a-i] into the mold [300]; and
overmolding the plastic material [30] onto the one or more laminates [34a-i].

## Patentansprüche

1. Fahrzeugquerelement (10a-c), das Folgendes umfasst:
einen Verbundkörper (14a), der Folgendes umfasst:
ein Kunststoffmaterial (30) und
ein oder mehrere Laminate (34a-i);
wobei der Körper (14a) einen länglichen Holm (58a) definiert, der sich über eine Länge (90) zwischen einem ersten Ende (62) und einem zweiten Ende (66) erstreckt;
wobei mindestens eines der einen oder mehreren Laminate (34a-i) mindestens teilweise entlang des länglichen Holms (58a) angeordnet ist; und
wobei das mindestens eine des einen oder der mehreren Laminate (34a-i), die mindestens teilweise entlang des länglichen Holms (58a) angeordnet ist, eine Gesamtdistanz (94) entlang des länglichen Holms (58a) überspannt, die weniger als 50 % der Länge des länglichen Holms (58a) beträgt.

2. Fahrzeugquerelement (10a-c) nach Anspruch 1, wobei:
- der Körper (14a) eine erste Halterung (114a) definiert, die mit dem länglichen Holm (58a) einheitlich ist und sich von diesem erstreckt; oder
- der Körper (14a) ein erstes Element (114a) definiert, das mit dem länglichen Holm (58a) einheitlich ist und sich von diesem erstreckt, und wobei mindestens eines des einen oder der mehreren Laminate (34a-i) mindestens teilweise entlang des länglichen Holms (58a) angeordnet ist und mindestens teilweise entlang des ersten Elements (114a) angeordnet ist.

3. Fahrzeugquerelement (10a-c), das Folgendes umfasst:
einen Verbundkörper (14a), der Folgendes umfasst:
ein Kunststoffmaterial (30) und
ein oder mehrere Laminate (34a-i);
wobei der Körper (14a) Folgendes definiert:
einen länglichen Holm (58a), der sich zwischen einem ersten Ende (62) und einem zweiten Ende (66) erstreckt; und
eine erste Halterung (114a), die mit dem länglichen Holm (58a) einheitlich verbunden ist und sich von diesem erstreckt; und
wobei mindestens eines des einen oder der mehreren Laminate (34a-i) mindestens teilweise entlang des länglichen Holms (58a) angeordnet ist und mindestens teilweise entlang der ersten Halterung (114a) angeordnet ist.

4. Fahrzeugquerelement (10a-c) nach Anspruch 3, wobei:
- das mindestens eine des einen oder der mehreren Laminate (34a-i), die mindestens teilweise entlang des länglichen Holms (58a) angeordnet ist, eine Gesamtdistanz (94) entlang des länglichen Holms (58a) überspannt, die weniger als 50 % einer Länge des länglichen Holms (58a) zwischen dem ersten und dem zweiten Ende (62, 66) beträgt; oder
- das mindestens eine des einen oder der mehreren Laminate (34a-i), die mindestens teilweise entlang des länglichen Holms (58a) angeordnet ist, eine Gesamtdistanz (94) entlang des länglichen Holms (58a) überspannt, die 50 % oder mehr einer Länge des länglichen Holms (58a) zwischen dem ersten und dem zweiten Ende (62, 66) beträgt.

5. Fahrzeugquerelement (10a-c) nach einem der Ansprüche 1 bis 4, wobei mindestens eines von dem ersten Ende (62) und dem zweiten Ende (66) des länglichen Holms (58a) eine oder mehrere Öffnungen (72) in den länglichen Holm (58a) zum Befestigen des länglichen Holms (58a) an einem Fahrzeug definiert.

6. Fahrzeugquerelement (10a-c) nach Anspruch 5, wobei sich mindestens eine der einen oder mehreren Öffnungen (72) durch mindestens eines der Laminate (34a-i) erstreckt.

7. Fahrzeugquerelement (10a-c) nach einem der Ansprüche 2 bis 4, wobei:
der Körper (14a) eine zweite Halterung (138) definiert, die mit dem länglichen Holm (58a) einheitlich ist und sich von diesem erstreckt und von der ersten Halterung (114a) weg erstreckt; und
mindestens eines der ein oder mehreren Laminate (34a-i) mindestens teilweise entlang der zweiten Halterung (138) angeordnet ist.

8. Fahrzeugquerelement (10a-c) nach Anspruch 7, wobei:
mindestens eines der ein oder mehreren Laminate (34a-i) mindestens teilweise entlang der zweiten Halterung (138) angeordnet ist und mindestens teilweise entlang des länglichen Holms (58a) angeordnet ist; und/oder
mindestens eines der ein oder mehreren Laminate (34a-i) mindestens teilweise entlang der zweiten Halterung (138) angeordnet ist und mindestens teilweise entlang der ersten Halterung (114a) angeordnet ist.

9. Fahrzeugquerelement (10a-c) nach einem der Ansprüche 1 bis 4, wobei:
der Körper eine zweite Halterung (138) definiert, die mit dem länglichen Holm (58a) einheitlich ist und sich von diesem erstreckt; und
mindestens eines der ein oder mehreren Laminate (34a-i) mindestens teilweise entlang der zweiten Halterung (138) angeordnet ist.

10. Fahrzeugquerelement (10a-c) nach Anspruch 9, wobei mindestens eines des einen oder der mehreren Laminate (34a-i) mindestens teilweise entlang des länglichen Holms (58a) angeordnet ist und mindestens teilweise entlang der zweiten Halterung (138) angeordnet ist.

11. Fahrzeugquerelement (10a-c) nach einem der Ansprüche 1 bis 4, wobei:
- der längliche Holm (58a) einen offenen Querschnitt definiert; oder
- der längliche Holm (58a) einen geschlossenen Querschnitt definiert; oder
- mindestens eines der ein oder mehreren Laminate (34a-i) eine Schicht aus Material (38a-f) umfasst, das Fasern umfasst; oder
- mindestens eines der ein oder mehreren Laminate (34a-i) eine Materialschicht umfasst, die Fasern umfasst, und mindestens eines der ein oder mehreren Laminate (34a-i) ein Matrixmaterial umfasst, das das Kunststoffmaterial (30) umfasst.

12. Verfahren zum Bilden eines Fahrzeugquerelements (10a-c), das Folgendes umfasst:
Bilden des Verbundkörpers (14a) nach einem der Ansprüche 1 bis 4 in einer Form (300).

13. Verfahren nach Anspruch 12, wobei das Bilden des Körpers in der Form (300) das Bilden des einen oder der mehreren Laminate (34a-i) in der Form (300) umfasst.

14. Verfahren nach Anspruch 13, wobei das Bilden des einen oder der mehreren Laminate (34a-i) in der Form (300) Folgendes umfasst:
Anordnen einer oder mehrerer Schichten (38a-f), die jeweils Fasern umfassen, in der Form (300); und
Umspritzen des Kunststoffmaterials (30) auf die eine oder die mehreren Schichten (38a-f),

15. Verfahren nach Anspruch 12, das Folgendes umfasst:
Anordnen des einen oder der mehreren Laminate (34a-i) in der Form (300); und
Umspritzen des Kunststoffmaterials (30) auf das eine oder die mehreren Laminate (34a-i),

## Revendications

1. Traverse de véhicule (10a-c), comprenant :
un corps composite (14a) comprenant :
un matériau plastique (30) ; et
un ou plusieurs stratifiés (34a-i) ;
dans lequel le corps (14a) définit une poutre allongée (58a) s'étendant sur une longueur (90) entre une première extrémité (62) et une seconde extrémité (66) ;
dans laquelle au moins un de l'un ou des stratifiés (34a-i) est au moins partiellement disposé le long de la poutre allongée (58a) ; et
dans laquelle l'au moins un de l'un ou des stratifiés (34a-i) au moins partiellement disposé le long de la poutre allongée (58a) couvre une distance totale (94) le long de la poutre allongée (58a) qui est inférieure à 50 % de la longueur de la poutre allongée (58a).

2. Traverse de véhicule (10a-c) selon la revendication 1, dans laquelle :
le corps (14a) définit un premier support (114a) monobloc avec et s'étendant à partir de la poutre allongée (58a) ; ou
le corps (14a) définit un premier support (114a) monobloc avec et s'étendant à partir de la poutre allongée (58a), et l'au moins un de l'un ou des stratifiés (34a-i) est au moins partiellement disposé le long de la poutre allongée (58a) et au moins partiellement disposé le long du premier support (114a).

3. Traverse de véhicule (10a-c), comprenant :
un corps composite (14a) comprenant :
un matériau plastique (30) ; et
un ou plusieurs stratifiés (34a-i) ;
dans laquelle le corps (14a) définit :
une poutre allongée (58a) s'étendant entre une première extrémité (62) et une seconde extrémité (66) ; et
un premier support (114a) monobloc avec et s'étendant à partir de la poutre allongée (58a) ; et
dans laquelle au moins un de l'un ou des stratifiés (34a-i) est au moins partiellement disposé le long de la poutre allongée (58a) et au moins partiellement disposé le long du premier support (114a).

4. Traverse de véhicule (10a-c) selon la revendication 3, dans laquelle :
l'au moins un de l'un ou des stratifiés (34a-i) au moins partiellement disposé le long de la poutre allongée (58a) couvre une distance totale (94) le long de la poutre allongée (58a) qui est inférieure à 50 % d'une longueur de la poutre allongée (58a) entre les première et seconde extrémités (62, 66) ; ou
l'au moins un de l'un ou des stratifiés (34a-i) au moins partiellement disposé le long de la poutre allongée (58a) couvre une distance totale (94) le long de la poutre allongée (58a) qui est 50 % ou plus d'une longueur de la poutre allongée (58a) entre les première et seconde extrémités (62, 66).

5. Traverse de véhicule (10a-c) selon l'une quelconque des revendications 1 à 4, dans laquelle au moins une de la première extrémité (62) et de la seconde extrémité (66) de la poutre allongée (58a) définit une ou plusieurs ouvertures (72) dans la poutre allongée (58a) pour fixer la poutre allongée (58a) à un véhicule.

6. Traverse de véhicule (10a-c) selon la revendication 5, dans laquelle l'au moins une de l'une ou des ouvertures (72) s'étend à travers l'au moins un de l'un ou des stratifiés (34a-i).

7. Traverse de véhicule (10a-c) selon l'une quelconque des revendications 2 à 4, dans laquelle :
le corps (14a) définit un second support (138) monobloc avec et s'étendant à partir de la poutre allongée (58a) et s'éloignant du premier support (114a) ; et
l'au moins un de l'un ou des stratifiés (34a-i) est au moins partiellement disposé le long du second support (138).

8. Traverse de véhicule (10a-c) selon la revendication 7, dans laquelle :
l'au moins un de l'un ou des stratifiés (34a-i) est au moins partiellement disposé le long du second support (138) et au moins partiellement disposé le long de la poutre allongée (58a) ; et/ou
l'au moins un de l'un ou des stratifiés (34a-i) est au moins partiellement disposé le long du second support (138) et au moins partiellement disposé le long du premier support (114a).

9. Traverse de véhicule (10a-c) selon l'une quelconque des revendications 1 à 4, dans laquelle :
le corps définit un second support (138) monobloc avec et s'étendant à partir de la poutre allongée (58a) ; et
l'au moins un de l'un ou des stratifiés (34a-i) est au moins partiellement disposé le long du second support (138).

10. Traverse de véhicule (10a-c) selon la revendication 9, dans laquelle l'au moins un de l'un ou des stratifiés (34a-i) est au moins partiellement disposé le long de la poutre allongée (58a) et au moins partiellement disposé le long du second support (138).

11. Traverse de véhicule (10a-c) selon l'une quelconque des revendications 1 à 4, dans laquelle :
- la poutre allongée (58a) définit une section transversale ouverte ; ou
- la poutre allongée (58a) définit une section transversale fermée ; ou
- l'au moins un de l'un ou des stratifiés (34a-i) comprend une couche de matériau (38a-f) comprenant des fibres ; ou
- l'au moins un de l'un ou des stratifiés (34a-i) comprend une couche de matériau comprenant des fibres, et l'au moins un de l'un ou des stratifiés (34a-i) comprend un matériau matriciel comprenant le matériau plastique (30).

12. Procédé pour former une traverse de véhicule (10a-c), comprenant :
la formation, dans un moule (300), du corps composite (14a) selon l'une quelconque des revendications 1 à 4.

13. Procédé selon la revendication 12, dans lequel la formation, dans le moule (300), du corps comprend la formation de l'un ou des stratifiés (34a-i) dans le moule (300).

14. Procédé selon la revendication 13, dans lequel la formation de l'un ou des stratifiés (34a-i) dans le moule (300) comprend :
le placement d'une ou de plusieurs couches (38a-f), chacune comprenant des fibres, dans le moule (300) ; et
le surmoulage du matériau plastique (30) sur l'une ou les couches (38a-f),

15. Procédé selon la revendication 12, comprenant :
le placement de l'un ou des stratifiés (34a-i) dans le moule (300) ; et
le surmoulage du matériau plastique (30) sur l'un ou les stratifiés (34a-i).
